Europäisches Patentamt

(19) European Patent Office

Office européen des brevets

(11) Publication number: **0 031 611**
**B1**

## (12) EUROPEAN PATENT SPECIFICATION

(45) Date of publication of patent specification: **18.04.84**

(51) Int. Cl.³: **F 16 L 1/04**

(21) Application number: **80201156.9**

(22) Date of filing: **04.12.80**

(54) Method and apparatus for the offshore joining of pipe strings near the surface of a body of water.

(30) Priority: **26.12.79 US 106820**

(43) Date of publication of application:
**08.07.81 Bulletin 81/27**

(45) Publication of the grant of the patent:
**18.04.84 Bulletin 84/16**

(84) Designated Contracting States:
**DE FR GB IT NL**

(56) References cited:
**DE - A - 2 542 539**
**NL - C - 62 051**
**US - A - 3 431 739**
**US - A - 3 592 239**
**US - A - 4 159 189**

**THE OIL AND GAS JOURNAL, July 7, 1975 J.W.
ELLS "Scours and spanning threaten sea lines"
pages 67-71**

(73) Proprietor: **SHELL INTERNATIONALE RESEARCH
MAATSCHAPPIJ B.V.
Carel van Bylandtlaan 30
NL-2596 HR Den Haag (NL)**

(72) Inventor: **Ayers, Ray Holland
12431 Honeywood Trail
Houston Texas (US)**
Inventor: **Hemphill, Dean Paxton
627 Electra
Houston Texas 77079 (US)**

(74) Representative: **Puister, Antonius Tonnis, Mr. et al,
P.O. Box 302
NL-2501 CH The Hague (NL)**

Courier Press, Leamington Spa, England.

## Method and apparatus for the offshore joining of pipe strings near the surface of a body of water.

The present invention relates to a method for the offshore joining of two pipe strings wherein part of each pipe string lies on the bottom of the water body during at least part of the time of joining, including positioning adjacent ends of both pipe strings near the surface of the water body for said joining.

Such a method is known from US patent specification No. 3,431,739. In the known method, the ends of the two pipe strings are joined on a barge by welding the ends of the pipe strings to a connecting element. The joined upwardly directed end parts of the pipe strings are subsequently lowered to the bottom of the water body by means of a cable attached to the connecting element. The cable is paid out from the barge while the barge sails in a lateral direction so that rotation of the joined end parts of the pipe strings is allowed until the joined end parts of the pipe strings have reached the bottom of the water body, thereby twisting the parts of the pipe strings laying on the bottom of the water body. A disadvantage of the known method is that the stresses introduced in the twisted parts of the pipe strings reduce the allowable operating pressure of the pipeline. Moreover, there is a risk that during lowering of the joined end parts of the pipe strings the end parts will bend such that buckling of the pipe string occurs.

It is the object of the invention to overcome the disadvantages pertaining to the known method. Therefore the method according to the invention is characterized in that the method further includes affixing the ends of the pipe strings while positioned near the surface with hinge halves each having a pivot axis exterior of the ends of the pipe strings, positioning the ends of the pipe strings at an angle to the horizontal and at about the same relative height such that the centre lines of the ends of the pipe strings cross a common point, merging the pivot axes of the hinge halves below the ends of the pipe strings, rotatably connecting the hinge halves at the merged pivot axes, and lowering the hinged ends of the pipe strings to an aligned position while simultaneously exerting tension on the pipe strings from a remote location.

The invention further relates to an apparatus for the offshore joining of two pipe strings according to the above method, which apparatus is characterized in that the apparatus includes disconnectable hinge halves which are rotatably attachable to the ends of the pipe strings each hinge half being so constructed what when attached to an end of a pipe string the hinge half has a pivot axis which is (a) exterior of the pipe string, and (b) perpendicular to the centre line of the pipe string, and that the apparatus further includes means for rotatably attaching the hinge halves at the pivot axes.

It is observed that US patent specification No. 3,592,239 discloses a flexible pipeline comprising a large number of short pipe sections interconnected by a corresponding number of hinges, of which the hinge halves are rigidly connected to the pipe sections. Such a flexible pipeline is suitable to be laid on the water bottom by means of a curved stinger, wherein the stinger guides the pipeline to the bottom of a water body. This publication, however, relates neither to the offshore joining of two pipe strings near the surface of a water body, nor to the lowering of the pipe ends after joining without the use of a stinger.

The present invention will now be described by way of example in more detail with reference to the accompanying drawings, wherein:

Figure 1 discloses the alignment hinge joining of pipelines in accordance with the present invention;

Figure 2 shows an eccentric hinge used in the method according to the invention;

Figures 3—8 show consecutive steps in laying a pipeline;

Figures 9—13 depict different alternatives of the eccentric hinge shown in Figure 2;

Figures 14 and 15 disclose hinge latching means used in the method according to the invention.

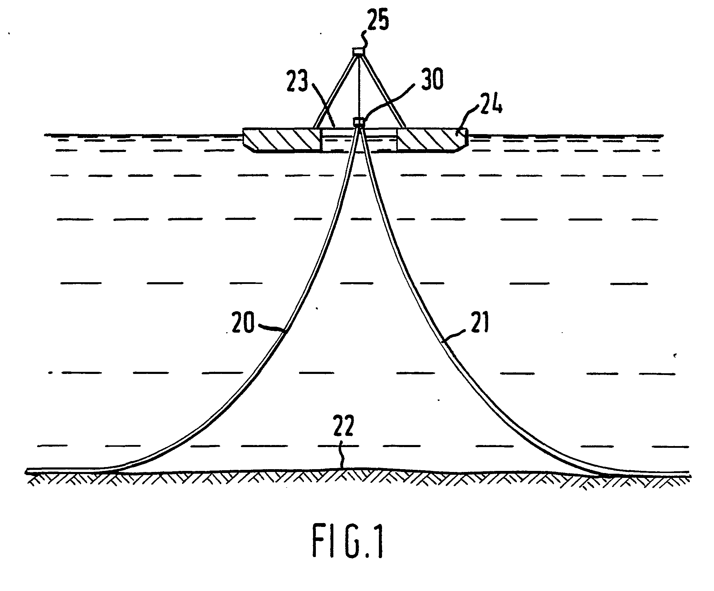

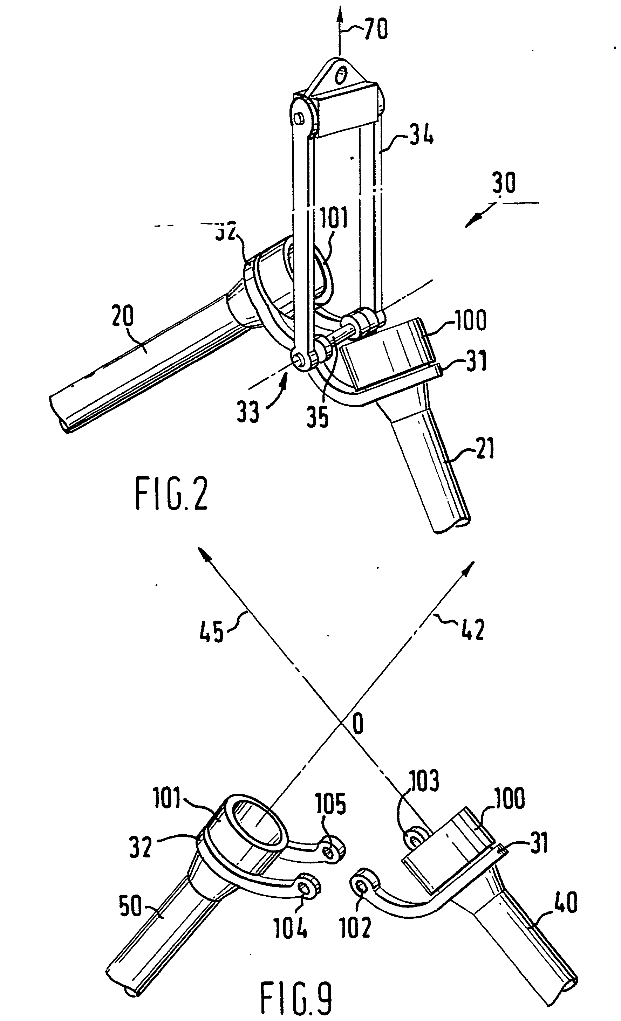

As shown in Figure 1, pipe string ends 20 and 21 are suspended from the sea floor 22 and held in a "J" configuration without overbend, while using tension to control the sagbend. Pipe string ends 20 and 21 extend through a moon pool 23 in a barge 24 and are suspended by a lift frame 25. Alternatively, the pipe string ends can be joined with a lift frame on the side of a barge. One embodiment of a pipe joining hinge 30 for the joining operation is shown in Figure 2. Halves 31 and 32 of the hinge 30 are each rotatable about the centre line of the pipe string ends 20 and 21. The hinge axis 33 is below and exterior of the pipe string ends 20 and 21, but supported vertically with a lever arm 34 so that hinge axis 33 remains horizontal, even during lowering. The two halves 31 and 32 of the hinge 30 may be pre-installed on the string ends 20 and 21 before the pipe strings are towed to location, and pin 35 can be inserted on site. Once the pin 35 is inserted and locked, the ends are closed and brought into complete alignment simply by lowering the hinge joint towards the sea floor 22 while simultaneously holding back tension on the opposite end of the new string.

A mechanical connector (not shown) may be latched and sealed as a direct result of the pivoting action associated with lowering the hinge to the sea floor. Alternatively, a connector may be separately installed or actuated at the sea floor, once the joint has been lowered. Of course, pipe plugs can be used to keep the pipe ends dry until the connector is in place. These plugs must be removed prior to locking the connector or pumped out of the pipeline afterwards. Once the connector is tight, parts of the hinge mechanism 30 can be detached and recovered for subsequent use, if desired.

The following steps are taken in order to complete a connection using hinge 30 of this invention: gross positioning of pipe string ends; fine positioning to bring the pipe string ends into acceptable relative position for connection method; fixing of the pipe string ends relative to each other; mechanical connection of the pipe strings; and fluid connection of the pipe strings. It may be assumed that the gross positioning and fine positioning steps will be difficult to accomplish in deep water by most methods that have been utilized or proposed in the past. The greatest risks and the highest level of uncertainty will exist during these steps. Once the two prepared pipe string ends are securely fixed in the desired spatial relationhsip with each other, the remaining steps may be carried out by the use of a variety of pipe connecting devices.

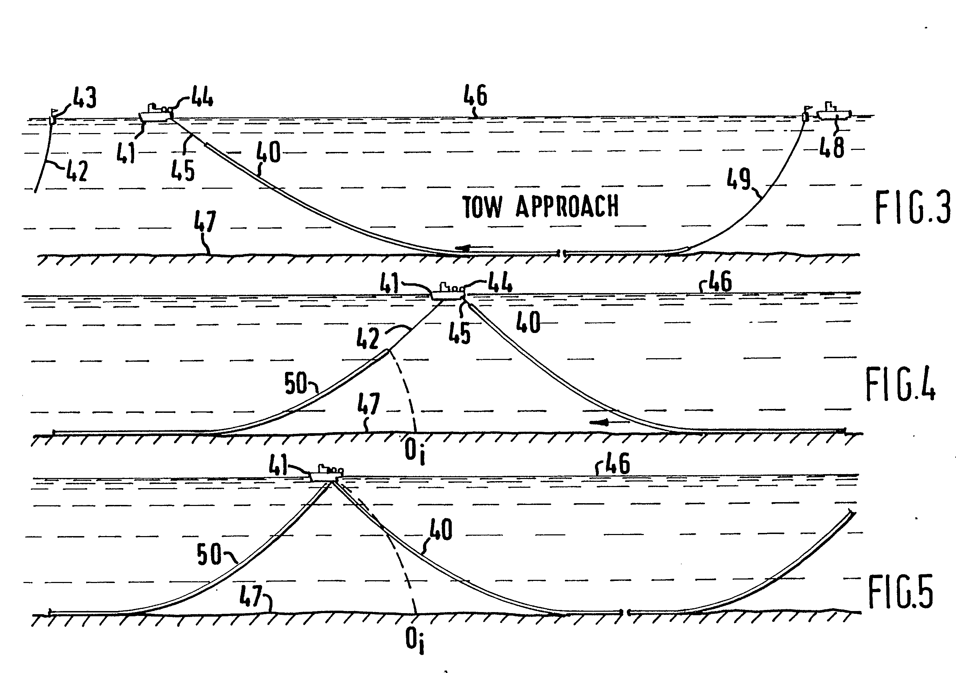

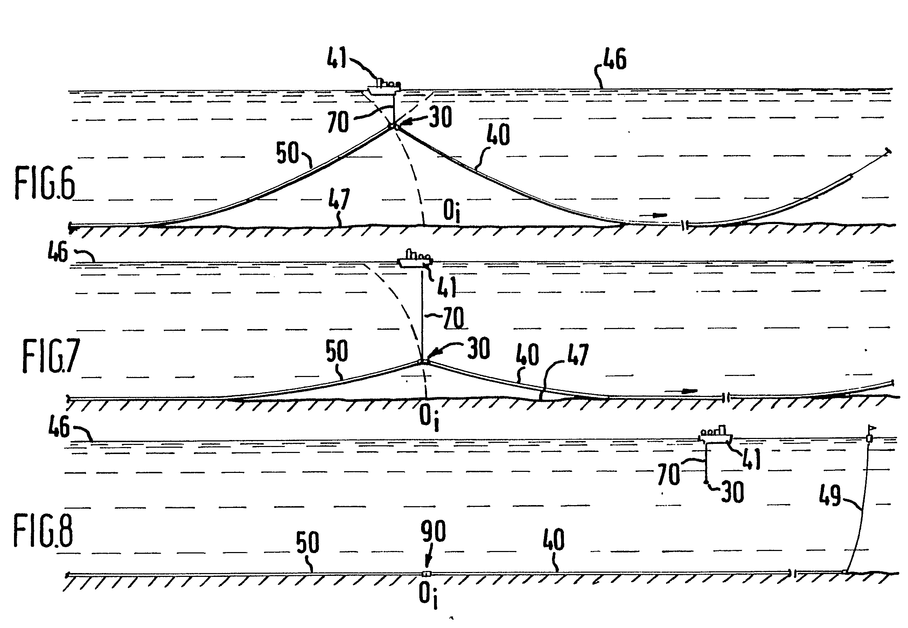

For explanatory purposes and not by way of limitation, for the following description assume that the pipeline is being constructed by the bottom-tow method where long (up to eight kilometres in length for example) strings of pipe are pre-fabricated and towed along the sea bed and positioned on the right-of-way simply by a tow vessel pulling on one end of the string. The tow may be either one where the pipe remains essentially on bottom during tow or the method may involve suspending a long section of pipe under towing tension so that the pipe end is at or near the surface (see Figure 3). The first of the three major steps of this invention is, then, gross positioning. In accordance with this step the head end of a new pipe string 40 is brought into alignment along the right-of-way approaching from the direction opposite to a previously installed pipe string 50. During the final approach, a tow vessel 41 picks up a cable 42 attached to the end of the previously installed pipe string 50, which cable 42 has been secured to a buoy 43 or tended by a support vessel (not shown). Cable 42 is of a strength and length dictated by the pipe characteristics and the water depth to permit raising the pipe under tension in a manner similar to that presently practised in abandoning and recovering pipelines from conventional lay barges. The two pipe strings 40 and 50 are now each connected to the winches 44 of vessel 41 by their lifting or towing cables 42 and 45. If the new string 40 has been towed on bottom, it is next raised to near the surface by the winch 44. The winch system is then utilized to apply tension to the cable 42 of the previously installed pipe string 50 and begin raising it also. During this process the vessel 41 (and the entire new pipe string 40 are moved in the direction of the previously installed pipe string 50. The point of reference is the original position (on bottom) of the previously installed pipe end (see Figure 4, reference point $O_i$).

The second of the three major steps of this invention is, as mentioned, fine positioning of the pipe string ends. As the ends of the pipe strings 40 and 50 approach the water surface 46, the vessel 41 is manoeuvred parallel to the right-of-way to assist in bringing the ends near to each other as the cables 42 and 45 are shortened. The suspended pipe strings 40 and 50 are in most cases tolerant of rather large excursions of the vessel 41 and of changes in the horizontal force component that controls pipe curvature. If the two lifting cables 42 and 45 are arranged to essentially touch each other (for instance by crossing anywhere between the pipe ends of pipe strings 40 and 50 and lifting sheaves), a plane is determined in space that includes the shortened cable segments 42 and 45 and the pipe ends.

The third of the three major steps of this invention involves fixing of the ends of the pipe strings 40 and 50. By means of a split hinge 30 the two pipe ends are structurally joined through a pivot or hinge pin 35 so as to permit rotation about the pivot but only in the plane perpendicular to the pivot. Although the pipe ends are now suspended at an angle to the horizontal (see Figure 5), the change in angle and the relative position of the two ends is determined and predictable during the process of lowering the pipe to the water bottom 47. At this time one cable may be disconnected, the pivot assembly 30 (and pipe strings 40 and 50) then being supported by a single cable 70 attached to the hinge 30. The required horizontal force components are maintained in each suspended pipe span through the hinge 30 and are equal and opposite. Also, at this stage, any necessary changes in pipe end fittings preferably are accomplished and the actual pipe connector (not shown) readied. As mentioned hereinafter, the connection may be made on the surface through some form of swivel for example, or the connector may be one that is activated directly by the rotation of the pipe ends about the pivot 30 causing the connector halves (not shown) to be mated and latched as the pipeline 40—50 approaches the bottom 47. Alternatively, the hinge 30 may serve primarily to align and secure the ends of the pipe strings 40 and 50 on bottom 47 at a fixed alignment and relative position so that a pre-installed connector (not shown) may then be activated to accomplish the mechanical and fluid connections; in this latter case the hinge 30 preferably includes various latching members (not shown) to ensure such positioning.

In order to restore the pipe strings 40 and 50 to the bottom 47, it is necessary for a second tow vessel 48 to move the new pipe string 40 away from the existing string 50 so as to continue the lowering process in a more or less vertical plane that will include the reference point $O_i$. Co-ordination of tow force, rate of lowering and the movement of the lowering vessel away from the previous string (keeping the cable essentially vertical) is desirable to protect the suspended spans from excess curvature (see Figures 6 and 7).

With the pipe strings 40—50 restored to the bottom, the next activities depend upon the type of connector 90 that is installed. If the connector 90 is of the surface-installed swivel type — or if it is of the self-energizing type — the surface vessel 41 may conduct or direct a test of the connection and then disconnect from the pipeline 40—50. If the connector 90 is of the independent type, the vessel 41 may cause the connector to activate, or the connection may be energized by other means. Again, after testing, the vessel 41 is released (see Figure 8). In either case, the second tow vessel 48 may now either release (and buoy off) cable 49 or it may remain on station to tend the cable 49 for installation of a further (not shown) pipe string.

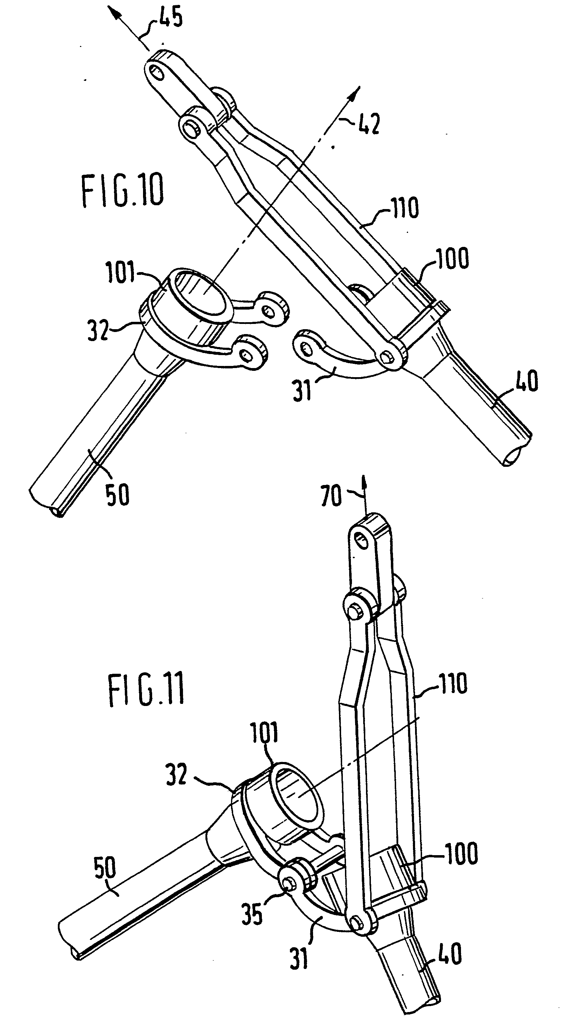

Referring now more specifically to the apparatus required for making pipeline connections, ends of the pipe strings 40 and 50 (see Figure 9 and also Figures 2—8), are lifted from the bottom 47 to the surface 46 of the water, so that initial connecting procedures may be carried out conveniently without the need of divers under pressure or of submersible vehicles. The lifting is done by application of controlled tension in cables 42 and 45 combined with movement of the supporting vessel 41 so as to always maintain the desired horizontal and vertical components of this tension. This horizontal component restricts the curvature of the suspended pipeline span so as to prevent failure in bending as has been taught elsewhere and is well understood.

The pipe-connecting means 100 and 101 were previously attached to the pipelines together with suitable fittings for establishing the mechanical alignment of the two pipe ends 40 and 50, here indicated as half hinge devices 31 and 32 preferably mounted to the pipe ends so as to permit rotation about the pipeline 40—50 without altering the tangential nature of the hinge pin holes shown as 102, 103 and 104, 105.

As the pipe ends 40 and 50 near each other, presumably at or above the water surface, the two cables 42 and 45 are crossed, forming an intersection at "O" and establishing a plane by the intersection. By changing the relative lengths of cables 42 and 45 between intersection "O" and pipe ends 40 and 50, preliminary alignment is obtained. By rotation of hinge halves 31 and 32 both mating hinge arms are aligned so that as relative cable lengths 42 and 45 are adjusted the hinge pin holes 102, 105 and 103, 104 are on a common axis and a pin 35 or other element may be introduced.

It may be desired to provide for external guides (not shown) and powered devices (not shown) suspended from the vessel 41 to assist in aligning hinge halves 31 and 32 and installing pin 35. Alternative or supplementary devices may be employed to assist in achieving alignment of the hinge halves 31 and 32, and multiple pins, bolts, clamps or other devices (not shown) may be substituted for the single hinge pin 35 shown in the drawings without departing from the scope of the invention.

Having established a hinged connection between pipe strings 40 and 50, the relative positions of all members are fixed with respect to the pin 35 and may be rotated in a plane perpendicular to the pin axis 33. For application to deep water pipeline connections, this plane is essentially vertical, although the concept is valid whatever the inclination of this plane.

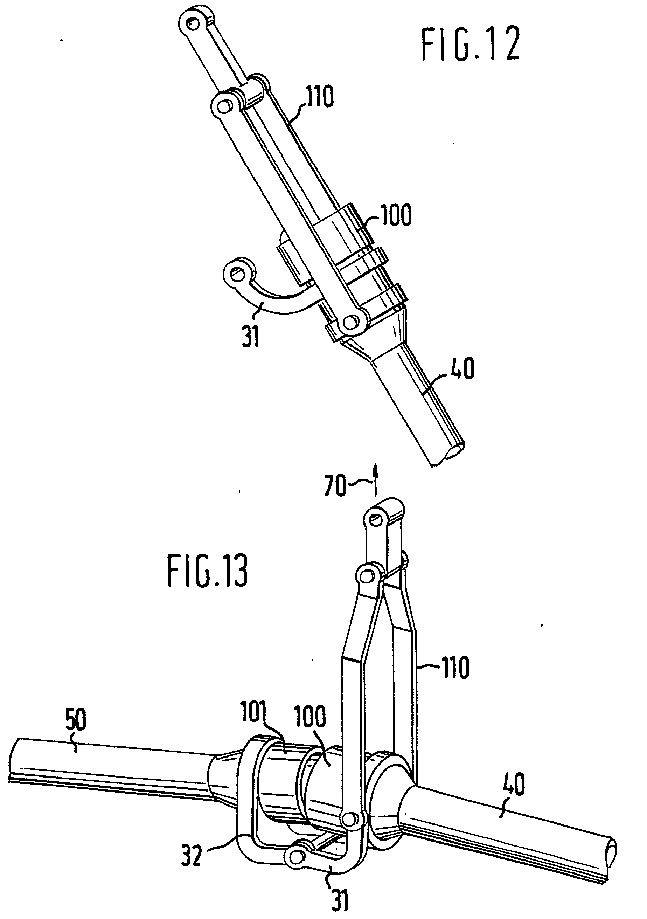

Also forming a part of one of the hinge halves 31 and 32 (or otherwise attached to one pipe end) may be a lifting or lowering frame 110, sling, bale or other device to allow vertical control of the position of the connector by the surface vessel (Figures 10, 11, 12, 1). This lifting/lowering frame 110 may be arranged to rotate about the axis of the pipeline in a manner similar to, but independent of the hinge half 31 or 32 (Figure 12). Yet another configuration would attach the frame to the hinge pin axis (Figure 2). One function of this device is to maintain the attached cable 70 clear of the two connector halves 100 and 101 as they approach each other while the assembly is lowered beneath the surface. Supporting the vertical load by one cable 70 attached to the lowering frame 34, the second cable may be removed, leaving only the main lowering cable 70 attached to the entire assembly. The lifting and lowering device and the lifting and lowering cable may be pre-assembled.

In preparation for restoring the pipe 40—50 to the sea floor 47 and effecting a connection, several operations may be needed concerning connector halves 100 and 101: removal of any lift attachments; removal of protective caps; installation or inspection of temporary fluid sealing plugs or devices employed to prevent flooding of the pipelines during lowering; installation of connector seals, gaskets, activating devices, etc.

Lowering of the assembly is accomplished by co-ordinating the movements of the support vessel 41 and its lowering cable 70 with those of the vessel 48 which is exerting a longitudinal force on the far end of one of the pipelines.

Depending upon the particular connecting device to be used, the actual mechanical and fluid connecttions between pipe strings 40 and 50 may take place automatically or by command during lowering as controlled by rotational position about the hinge pin 35 or it may be independent and commanded and actuated after the assembly has been lowered to, or near, the bottom 47 (Figure 13). In the latter case, some latching means (not shown) may be included to secure the pipe strings 40 and 50 from further rotation when the connector halves 100 and 101 are in proper alignment.

An automatic or self-activating pipeline coupling (not shown) may be included as a part of the apparatus when installing pipelines by this method. The coupling may include, firstly, an automatic guide and latching mechanism actuated by the rotation of the two pipes about the hinge with the latch position selected so as to ensure latching before the two pipelines are completely on bottom so that sufficient vertical movement is available to cause full engagement, and secondly, a fluid connection actuated by external means.

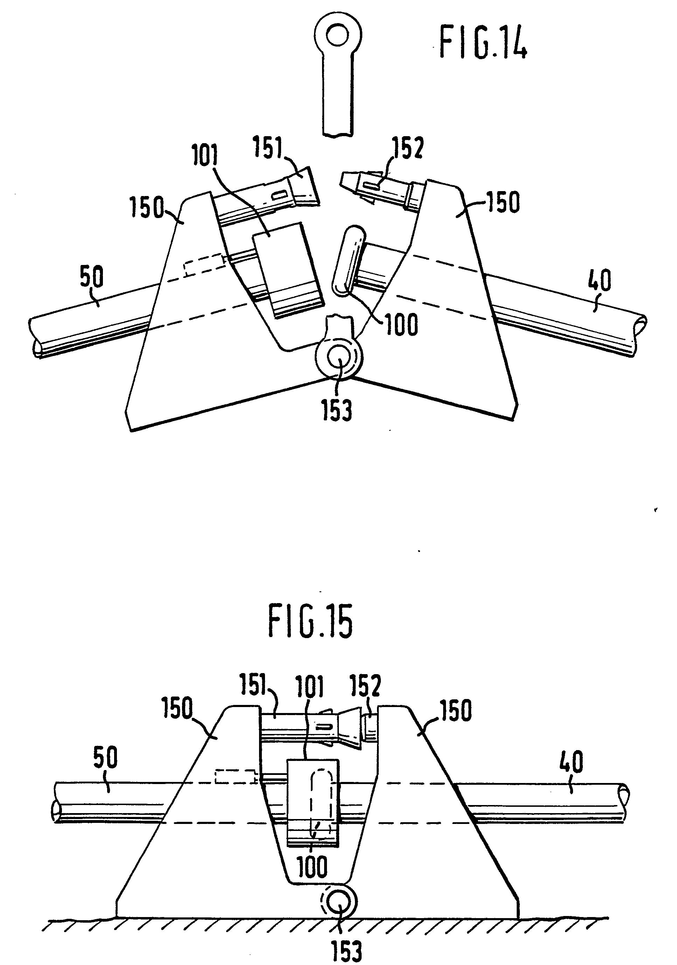

The concept of pivot alignment frame 150, and latch with a socket 151 and engageable ball 152 shown in Figures 14 and 15 may also be useful in establishing a pipe connection by an independently activated coupling device. In this application the pivot device 150, through a pivot 153 and separate latch 151—152, provides alignment and spacing for any independent coupling.

The present invention includes the completion of the mechanical and fluid connection near or above the water level, with a suitable swivel included to permit the connected pipeline to be returned to the sea floor. This swivel has its axis perpendicular to the general pipeline alignment so that the two connected pipes may freely rotate about this axis as they are lowered, without affecting the connection.

Pipe bends may be required on each side of the swivel. It is frequently a requirement of pipeline design that large radius (equivalent to 3 or 4 pipe diameters) bends be employed in order to assure free passage of scrapers or pigs during pipeline operations. For this reason, it may be necessary to supply specialized lifting links or frame in order to raise and to align the pipeline ends with the large bends attached. Alternatively, the pipe ends may be raised without bends or swivel halves and then joined by a prepared spool piece (bends and swivel as a unit) or by two girth welds or mechanical connections.

The mechanical and fluid connection may be achieved by any of several means, including: a connector-swivel; a single mechanical connector, preferably in the horizontal run at one side of the built-in swivel; a girth weld; or two girth welds, or two mechanical connections, to install a pre-fabricated spool including bends and swivel, by joining in the near vertical pipe ends.

A significant feature of using an eccentric hinge alignment procedure as set forth herein is that, upon lowering of the hinged pipe ends, a substantial bending lever is created to press the pipe ends together. This means not only that connectors requiring a large engagement force can be used, but more importantly that a connector which automatically latches when rotated into position can be employed.

## Claims

1. Method for the offshore joining of two pipe strings (40, 50) wherein part of each pipe string (40, 50) lies on the bottom (47) of the water body during at least part of the time of joining, including positioning adjacent ends of both pipe strings (40, 50) near the surface (46) of the water body for said joining, characterized in that the method further includes affixing the ends of the pipe strings while positioned near the surface (40, 50) with hinge halves (31, 32) each having a pivot axis exterior of the ends of the pipe strings (40, 50), positioning the ends of the pipe strings (40, 50) at an angle to the horizontal and at about the same relative height such that the centre lines of the ends of the pipe strings (40, 50) cross a common point, merging the pivot axes of the hinge halves (31, 32) below the ends of the pipe strings (40, 50), rotatably connecting the hinge halves (31, 32) at the merged pivot axes, and lowering the hinged ends of the pipe strings (40, 50) to an aligned position while simultaneously exerting tension on the pipe strings (40, 50) from a remote location.

2. Method according to claim 1, characterized in that the adjacent ends of the pipe strings (40, 50) are lifted to near the surface (46) of the water body by a vessel (41) effecting the joining of the two pipe strings (40, 50).

3. Method according to claim 1 or 2, characterized in that at least one of the pipe strings is located completely on the bottom (47) of the water body prior to joining with the other pipe string.

4. Method according to claim 3, characterized in that one of the pipe strings (40) is towed on-bottom for joining with the other pipe string (50), and the other pipe string (50) is on-bottom and has a cable (42) and attached buoy (43) affixed thereto.

5. Method according to claim 4, characterized in that the method further includes locating the buoy (43) and lifting the other pipe string (50) with the cable (42).

6. Method according to any one of the claims 1—5, characterized in that the two ends of the pipe strings (40, 50) are parts of two pipe strings located offshore.

7. Method according to claim 6, characterized in that part of each pipe string (40, 50) lies on the bottom (47) of the water body during at least part of the time of aligning the ends of the pipe strings (40, 50).

8. Method according to any one of the claims 1—7, characterized in that the hinged ends of the pipe strings (40, 50) are lowered to an aligned position by means attached to at least one of the hinge halves (31, 32).

9. Method according to any one of the claims 1—8, characterized in that the hinged ends of the pipe strings (40, 50) are lowered to an aligned position by means attached to both of the hinge halves (31, 32).

10. Method according to claim 9, characterized in that the lowering means is attached to the hinge halves (31, 32) at the pivot axes of the hinge halves (31, 32).

11. Method according to any one of the claims 1—10, characterized in that the disconnected hinge halves (31, 32) are rotated about the centre line of the ends of the pipe strings (40, 50) to facilitate merging the pivot axes.

12. Method according to any one of the claims 1—11, characterized in that the hinge halves (31, 32) are provided with a latch including a socket (151) and a ball (152) which are connected above the ends of the pipe strings (40, 50) as the hinged ends of the pipe strings (40, 50) are lowered to an aligned position.

13. Apparatus for offshore joining of the ends of the pipe strings (40, 50) according to any one of the claims 1—12, characterized in that the apparatus includes disconnectable hinge halves (31, 32) which are rotatably attachable to the ends of the pipe strings (40, 50), each hinge half being so constructed that when attached to an end of a pipe string the hinge half has a pivot axis which is (a) exterior of the pipe string, and (b) perpendicular to the centre line of the pipe string, and that the apparatus further includes means for rotatably attaching the hinge halves (31, 32) at the pivot axes.

14. Apparatus according to claim 13, characterized in that it further includes means for suspending the ends of the pipe strings (40, 50) and the hinge halves (31, 32) which means is attached to at least one of the hinge halves (31, 32).

15. Apparatus according to claim 14, characterized in that the suspending means is attached to the hinge halves (31, 32) at the pivot axes thereof.

16. Apparatus according to claim 13, characterized in that it further includes a latch including a socket (151) and a ball (152) connected to the hinge halves (31, 32) on the opposite sides of the ends of the pipe strings (40, 50) and adapted to engage, ball (152) into socket (151), when the hinged ends of the pipe strings (40, 50) are aligned.

## Revendications

1. Un procédé pour joindre, au large, deux tronçons de tuyaux (40, 50), selon lequel une partie de chaque tronçon de tuyau (40, 50) repose sur le fond (47) de la masse d'eau durant au moins une partie du temps de la jonction, comprenant la mise en place des extrémités adjacentes des deux tronçons de tuyaux (40, 50) près de la surface (46) de la masse d'eau pour cette jonction, caractérisé en ce que le procéde comprend aussi la fixation des extrémités des tronçons de tuyaux (40, 50) tandis qu'elles sont placées à proximité de la surface au moyen de moitiés d'articulation (31, 32) ayant chacune un axe de pivotement à l'extérieur des extrémités des tronçons de tuyaux (40, 50), la mise en place des extrémités des tronçons de tuyaux (40, 50) à un certain angle avec l'horizontale et à peu près à la même hauteur relative de façon que les axes des extrémités des tronçons de tuyaux (40, 50) se croisent à un point commun, la mise en coïncidence des axes de pivotement des moités d'articulation (31, 32) au-dessous des extrémités des tronçons de tuyaux (40, 50), l'assemblage rotatif des moitiés d'articulation (31, 32) aux axes de pivotement mis en coïncidence et l'abaissement des extrémités articulées des tronçons de tuyaux (40, 50) à une position alignée tandis qu'on exerce simultanément une tension sur les tronçons de tuyaux (40, 50) à partir d'un endroit éloigné.

2. Un procédé selon la revendication 1, caractérisé en ce que les extrémités adjacentes des tronçons de tuyaux (40, 50) sont soulevées jusque près de la surface (46) de la masse d'eau par un navire (41) effectuant la jonction des deux tronçons de tuyaux (40, 50).

3. Un procédé selon la revendication 1 ou 2, caractérisé en ce qu'au moins un des tronçons de tuyaux est situé complètement sur le fond (47) de la masse d'eau avant sa jonction avec l'autre tronçon de tuyau.

4. Un procédé selon la revendication 3, caractérisé en ce qu'un des tronçons de tuyaux (40) est remorqué sur le fond pour jonction avec l'autre tronçon de tuyau (50), et cet autre tronçon de tuyau (50) est sur le fond et a un câble (42) et une bouée attachée (43) fixés à lui.

5. Un procédé selon la revendication 4, caractérisé en ce qu'il comprend en outre la mise en place de la bouée (43) et le levage de l'autre tronçon de tuyau (50) avec le câble (42).

6. Un procédé selon l'une quelconque des revendications 1 à 5, caractérisé en ce que les deux extrémités des tronçons de tuyaux (40, 50) sont des parties de deux tronçons de tuyaux situés au large.

7. Un procédé selon la revendication 6, caractérisé en ce qu'une partie de chaque tronçon de tuyau (40, 50 repose sur le fond (47) de la masse d'eau durant au moins une partie du temps d'alignement des extrémités des tronçons de tuyaux (40, 50).

8. Un procédé selon l'une quelconque des revendications 1 à 7, caractérisé en ce que les extrémités articulées des tronçons de tuyaux (40, 50) sont descendues à une position alignée par des moyens attachés à au moins une des moitiés d'articulation (31, 32).

9. Un procédé selon l'une quelconque des revendications 1 à 8, caractérisé en ce que les extrémités articulées des tronçons de tuyaux (40, 50) sont descendues à une position alingée par des moyens attachés aux deux moitiés d'articulation (31, 32).

10. Un procédé selon la revendication 9, caractérisé en ce que le moyen de descente est attaché aux moitiés d'articulation (31, 32) aux axes de pivotement des moitiés d'articulation (31, 32).

11. Un procédé selon l'une quelconque des revendications 1 à 10, caractérisé en ce que les moyens d'articulation (31, 32) séparés sont tournés autour de l'axe des extrémités des tronçons de tuyaux (40, 50) pour faciliter la mise en coïncidence des axes de pivotement.

12. Un procédé selon l'une quelconque des revendications 1 à 11, caractérisé en ce que les moitiés d'articulation (31, 32) sont pourvues d'un verrou comprenant une douille (151) et une balle (152) qui sont connectées au-dessus des extrémités de tronçons de tuyaux (40, 50) quand les extrémités des tronçons de tuyaux (40, 50) sont descendues à une position alignée.

13. Un appareil pour joindre, au large, les extrémités des tronçons de tuyaux (40, 50) selon l'une quelconque des revendications 1 à 12, caractérisé en ce que l'appareil comprend des moitiés d'articulation séparables (31, 32) qui sont fixables de manière rotative aux extrémités des tronçons de tuyaux (40, 50), chaque moitié d'articulation étant construite de manière que quand elle est attachée à une extrémité d'un tronçon de tuyau, la moitié d'articulation ait un axe de pivotement qui se trouve (a) à l'extérieur du tronçon de tuyau et (b) perpendiculaire à l'axe du tronçon de tuyau, et que l'appareil comprend aussi des moyens pour assembler de manière rotative les moitiés d'articulation (31, 32) aux axes de pivotement.

14. Un appareil selon la revendication 13, caractérisé en ce qu'il comprend aussi des moyens pour suspendre les extrémités des tronçons de tuyaux (40, 50) et les moitiés d'articulation (31, 32), ces moyens étant attachés à au moins une des moitiés d'articulation (31, 32).

15. Un appareil selon la revendication 14, caractérisé en ce que les moyens de suspension sont attachés aux moitiés d'articulation (31, 32) à leurs axes de pivotement.

16. Un appareil selon la revendication 13, caractérisé en ce qu'il comprend aussi un verrou comprenant une douille (151) et une balle (152) reliées aux moitiés d'articulation (31, 32) sur les côtés opposés des extrémités des tronçons de tuyaux (40, 50) et prévues pour venir en prise, la balle (152) dans la douille (151), quand les extrémités articulées des tronçons de tuyaux (40, 50) sont alignées.

**Patentansprüche**

1. Verfahren zum Verbinden in Küstengewässern von zwei Rohrsträngen (40, 50), die während wenigstens eines Teils des Verbindungsvorganges je zum Teil auf dem Gewässergrund (47) aufruhen, wobei die zusammengehörenden Enden der beiden Rohrstränge (40, 50) zum Verbinden in der Nähe de Wasseroberfläche (46) in Stellung gebracht werden, dadurch gekennzeichnet, daß ferner an den nahe der Oberfläche gehaltenen Enden der Rohrstränge (40, 50) Gelenkkupplungshälften (31, 32) befestigt werden, die je eine außerhalb der Enden der Rohrstränge (40, 50) gelegene Schwenkachse Besitzen, die Enden der Rohrstränge (40, 50) unter einem Winkel gegen die Waagerechte und etwa auf der gleichen Relativhöhe in Stellung gebracht werden, derart, daß die Mittellinien der Enden der Rohrstränge (40, 50) sich in einem gemeinsamen Punkt schneiden, die Schwenkachsen der Gelenkkupplungshälften (31, 32) unter den Enden der Rohrstränge (40, 50) in einer gemeinsamen Achse zur Deckung gebracht werden, die Gelenkkupplungshälften (31, 32) in den eine gemeinsame Achse bildenden Schwenkachsen drehbar miteinander verbunden werden, und die gelenkig miteinander verbundenen Enden der Rohrstränge (40, 50) in eine Stellung abgesenkt werden, in der sie zueinander fluchten, und dabei gleichzeitig auf die Rohrstränge (40, 50) von einer entfernten Stelle aus eine Zugkraft ausgeübt wird.

2. Verfahren nach Anspruch 1, dadurch gekennzeichnet, daß die zusammengehörenden Enden der Rohrstränge (40, 50) von einem Wasserfahrzeug (41), das die beiden Rohrstränge (40, 50) miteinander verbindet, in die Nähe der Wasseroberfläche (46) gehoben werden.

3. Verfahren nach Anspruch 1 oder 2, dadurch gekennzeichnet, daß von den Rohrsträngen wenigstens einer vor dem Verbinden mit dem anderen Rohrstrang vollständig auf dem Gewässergrund (47) aufruht.

4. Verfahren nach Anspruch 3, dadurch gekennzeichnet, daß einer der Rohrstränge (40) zum Verbinden mit dem anderen Rohrstrang (50) auf dem Grund entlanggeschleppt wird, und der andere Rohrstrang (50) auf dem Grund aufliegt und an ihm ein Kabel (42) und eine daran befestigte Boje (43) befestigt sind.

5. Verfahren nach Anspruch 4, dadurch gekennzeichnet, daß die Boje (43) aufgesucht wird und der andere Rohrstrang (50) mit dem Kabel (42) gehoben wird.

6. Verfahren nach einem der Ansprüche 1 bis 5, dadurch gekennzeichnet, daß die beiden Enden der Rohrstränge (40, 50) Teile von zwei küstennah verlegten Rohrleitungen sind.

7. Verfahren nach Anspruch 6, dadurch gekennzeichnet, daß während wenigstens eines Abschnitts der Zeit, in der die Enden der Rohrstränge (40, 50) zueinander ausgerichtet werden, ein Abschnitt jedes Rohrstranges (40, 50) auf dem Gewässergrund (47) aufliegt.

8. Verfahren nach einem der Ansprüche 1 bis 7, dadurch gekennzeichnet, daß die gelenkig miteinander verbundenen Enden der Rohrstränge (40, 50) mittels einer an wenigstens einer der Gelenkkupplungshälften (31, 32) befestigten Vorrichtung in eine Stellung abgesenkt werden, in der sie zueinander fluchten.

9. Verfahren nach einem der Ansprüche 1 bis 8, dadurch gekennzeichnet, daß die gelenkig miteinander verbundenen Enden der Rohrstränge (40, 50) mittels einer an beiden Gelenkkupplungshälften (31, 32) befestigten Vorrichtung in eine Stellung abgesenkt werden, in der sie zueinander fluchten.

10. Verfahren nach Anspruch 9, dadurch gekennzeichnet, daß die Absenkvorrichtung an den Gelenkkupplungshälften (31, 32) an deren Schwenkachsen befestigt ist.

11. Verfahren nach einem der Ansprüche 1 bis 10, dadurch gekennzeichnet, daß, um das Indeckungbringen der Schwenkachsen in einer gemeinsamen Achse zu vereinfachen, die entkuppelten Gelenkkupplungshälften (31, 32) um die Mittellinie der Enden der Rohrstränge (40, 50) gedreht werden.

12. Verfahren nach einem der Ansprüche 1 bis 11, dadurch gekennzeichnet, daß die Gelenkkupplungshälften (31, 32) mit einer Verriegelung versehen sind, die eine Kugelmuffe (151) und eine Kugel (152) aufweist, die beim Ansenken der gelenkig miteinander verbunden Enden der Rohrstränge (40, 50) in eine Stellung, in der sie zueinander fluchten, über den Enden der Rohrstränge (40, 50) miteinander verbunden werden.

13. Vorrichtung zum Verbinden in Küstengewässern der Enden der Rohrstränge (40, 50) nach einem der Ansprüche 1 bis 12, dadurch gekennzeichnet, daß sie entkuppelbare Gelenkkupplungshälften (31, 32) aufweist, die an den Enden der Rohrstränge (40, 50) drehbar befestigbar sind, wobei jede Gelenkkupplungshälfte so ausgebildet ist, daß nach ihrem Befestigen an einem Ende eines Rohrstranges ihre Schwenkachse (a) außerhalb des Rohrstranges und (b) rechtwinklig zur Mittellinie des Rohrstranges angeordnet ist, und die Vorrichtung ferner ein Mittel zum drehbaren Verbinden der Gelenkkupplungshälften (31, 32) an den Schwenkachsen hat.

14. Vorrichtung nach Anspruch 13, dadurch gekennzeichnet, daß sie ferner eine Vorrichtung zum Aufhängen der Enden der Rohrstränge (40, 50) und der Gelenkkupplungshälften (31, 32) aufweist, die an wenigstens einer der Gelenkkupplungshälften (31, 32) befestigt ist.

15. Vorrichtung nach Anspruch 14, dadurch gekennzeichnet, daß die Aufhängevorrichtung an den Gelenkkupplungshälften (31, 32) an deren Schwenkachsen befestigt ist.

16. Vorrichtung nach Anspruch 13, dadurch gekennzeichnet, daß sie ferner eine Verriegelung mit einer Kugelmuffe (151) und einer Kugel (152) aufweist, die mit den Gelenkkupplungshälften (31, 32) auf den den Enden der Rohrstränge (40, 50) abgewandten Seiten verbunden ist und, wenn die gelenkig miteinander verbundenen Enden der Rohrstränge (40, 50) zueinander fluchten, durch Eindringen der Kugel (152) in die Kugelmuffe (151) zu schließen vermag.

FIG.1

0 031 611

FIG.2

FIG.9

2

FIG.3

FIG.4

FIG.5

TOW APPROACH

FIG.6

FIG.7

FIG.8

FIG.10

FIG.11

FIG.12

110

100

31

40

70

FIG.13

110

50

101

100

40

32

31

0 031 611

FIG.14

151
101
152
150
150
50
40
100
153

FIG.15

151 101 152
150
150
50
40
100
153

7